# EUROPÄISCHE PATENTSCHRIFT

(11) **EP 1 183 512 B1**
(45) Veröffentlichungstag und Bekanntmachung des Hinweises auf die Patenterteilung: **30.06.2004**
(21) Anmeldenummer: 00940181.1
(22) Anmeldetag: 10.05.2000
(51) Int. Cl.: G01M 9/06

(54) **VORRICHTUNG ZUR DRUCK-, SCHALL- UND VIBRATIONSMESSUNG, SOWIE VERFAHREN ZUR STRÖMUNGSANALYSE AN BAUTEILOBERFLÄCHEN**
DEVICE FOR MEASURING PRESSURE, SOUND AND VIBRATION AND METHOD FOR ANALYZING FLOW ON SURFACES OF STRUCTURAL PARTS
DISPOSITIF DE MESURE DE PRESSION, DE SON ET DE VIBRATION, ET PROCEDE D'ANALYSE D'ECOULEMENT A LA SURFACE DE PIECES

(30) Priorität: 20.05.1999 DE 19923087
(43) Veröffentlichungstag der Anmeldung: 06.03.2002
(73) Patentinhaber: EADS Deutschland GmbH, 81663 München (DE)
(72) Erfinder: SOBOTTA, Gerald, D-82054 Sauerlach (DE); BOSCH, Dieter, D-81673 München (DE)
(86) Internationale Anmeldenummer: PCT/DE2000/001468
(87) Internationale Veröffentlichungsnummer: WO 2000/071984

(56) Entgegenhaltungen:
- DE-A- 3 337 978
- US-A- 4 770 032
- US-A- 5 457 630
- US-A- 5 874 671

## Beschreibung

Die vorliegende Erfindung betrifft eine Vorrichtung zur Druck-, Schall- und/oder Vibrationsmessung, insbesondere zur Strömungsanalyse an Flugkörpern, sowie ein Verfahren zur Strömungsanalyse an Bauteiloberflächen, insbesondere für Luftfahrtanwendungen.

Die Charakterisierung von Strömungen an Bauteiloberflächen, ist in verschiedenen Bereichen der Technik von zunehmender Bedeutung. Insbesondere bei Tragflächen von Flugzeugen kann durch genaue Kenntnis der Strömungscharakteristika im Bereich der Tragflächen eine Optimierung der Tragflächenform in bezug auf die jeweiligen Einsatzbedingungen erfolgen. Dadurch können Flugeigenschaften verbessert werden und es wird eine Verringerung des Treibstoffbedarfs ermöglicht.

Daneben sind auch in weiteren Bereichen der Technik strömungsmechanische Meßverfahren erforderlich, um die Aerodynamik zu verbessern. Beispielsweise kann in der Kfz-Technik der Treibstoffverbrauch durch Optimierung von Bauteilformen, z.B. im Bereich des Ansaugstranges, reduziert werden.

Um die Strömungscharakteristika an Tragflächen von Flugzeugen zu erfassen, wurden bisher Piezodruckfolien und Membrandrucksensoren an der Flügeloberfläche angebracht, um beispielsweise im Labor oder im Windkanal Meßwerte zu erfassen. In DE- 33 37 978 sowie in dem Artikel "Shock detection by means of piezofoils", W.Nitsche et al, Zeitschrift für Fiugwissenschaften und Weltraumforschung 15(1991) S. 223-226, Springer-Verlag, werden Meßverfahren beschrieben, mit dem Verdichtungsstöße an Strömungskörpem detektiert werden. Dabei wird ein Sensorarray, das aus einer dünnen, piezoelektrischen Folie geformt ist, auf dem zu untersuchenden Körper angebracht. Die Piezosensoren detektieren die instationären Schwankungen von Druck, Schubspannung und Temperatur und erlauben damit eine Aussage über die Lage von Verdichtungsstößen. Die Piezofolie wird auf einer Tragfläche angebracht und die strömungsinduzierten lokalen Druckschwankungen werden gemessen. Daraus werden die charakteristischen RMS-Werte über das Tragflächenprofil bestimmt um die Lage des Verdichtungsstoßes bzw. die Stossposition zu ermitteln. Bekannte Vorrichtungen dieser Art haben jedoch den Nachteil, daß die Sensoren hohen Belastungen ausgesetzt sind, beispielsweise durch Verschmutzung oder Vereisung, was zur Beeinträchtigung der Meßergebnisse und sogar zur Zerstörung der Sensoren führen kann. Weiterhin verändern die Sensoren durch Wechselwirkung mit dem strömenden Medium die ursprüngliche Strömung und verfälschen somit die Meßergebnisse. Hinzu kommt, daß aufwendige Produktions- und Wartungsarbeiten notwendig sind. Die auf die. Bauteiloberfläche geklebten Sensoren sind daher anfällig gegen Beschädigungen verschiedener Art, wie beispielsweise Verschmutzung, Vogelschlag, u.s.w., und erfordern einen großen Aufwand bei Produktion und Wartung.

Daher ist es die Aufgabe der vorliegenden Erfindung, eine Vorrichtung zur Druck-, Schallund/oder Vibrationsmessung zu schaffen, die robust und kostengünstig ist, für den operativen Einsatz geeignet bzw. serientauglich ist, und die genaue Meßergebnisse bei langer Lebensdauer liefert. Weiterhin soll ein Verfahren zur Strömungsanalyse an Bauteiloberflächen angegeben werden, das insbesondere für Luftfahrtanwendungen geeignet ist und mit dem im operativen Einsatz die Strömungscharakteristika an einer Bauteilstruktur bestimmbar sind.

Diese Aufgabe wird gelöst durch die Vorrichtung zur Druck-, Schall- und/oder Vibrationsmessung gemäß Patentanspruch 1 und durch das Verfahren zur Strömungsanalyse an Bauteiloberflächen gemäß Patentanspruch 11. Weitere vorteilhafte Merkmale, Aspekte und Details der Erfindung ergeben sich aus den abhängigen Ansprüchen, der Beschreibung und den Zeichnungen.

Die erfindungsgemäße Vorrichtung zur Druck-, Schall- und/oder Vibrationsmessung umfaßt eine Sensoreinrichtung zur Aufnahme von Druck- oder Schallwellen, die an eine Bauteilstruktur gekoppelt sind um auf die Bauteiloberfläche wirkende Kräfte zu messen, wobei die Sensoreinrichtung vollständig innerhalb der Bauteilstruktur bzw. auf der Rückseite der Bauteiloberfläche angeordnet ist. Dadurch ist die Vorrichtung auch unter extremen Belastungen wie z.B. beim Einsatz an Tragflächen von Flugzeugen, vor Beschädigungen geschützt und die Lebensdauer ist erhöht.

Vorteilhafterweise umfaßt die Vorrichtung weiterhin eine Auswerteeinheit zur Signalauswertung mittels Verfahren der künstlichen Intelligenz. Dadurch ist es möglich, die Strömungscharakteristika mit großer Genauigkeit aus Meßwerten zu bestimmen, die unterhalb der Oberfläche der Bauteilstruktur erfaßt wurden. Bevorzugt umfaßt die Sensoreinrichtung eine Vielzahl von Drucksensoren, die unterhalb bzw. auf der Rückseite einer Außenhaut der Bauteilstruktur angeordnet sind. Die Sensoreinrichtung kann z.B. eine piezoelektrische Folie sein, die fest mit der Innenseite einer äußeren Wandung der Bauteilstruktur verbunden ist. insbesondere kann die Bauteilstruktur eine Tragfläche eines Flugkörpers sein, wobei die Sensoreinrichtung z.B. unterhalb der Flügelhaut in einem Tragflächenbereich angeordnet ist.

Daten- und/oder Versorgungsleitungen der Sensoreinrichtung können vollständig innerhalb der Bauteilstruktur angeordnet bzw. integriert sein. Auf diese Weise können die Leitungen keinen Einfluß auf die eigentliche Strömung ausüben, weshalb ein genaueres Meßergebnis erzielt wird. Darüber hinaus wird die Sicherheit der Meßwerterfassung erhöht, da die Leitungen vor Beschädigungen geschützt sind.

Die Vorrichtung ist vorteilhafterweise derart ausgelegt, daß Frequenzen kleiner oder gleich 250 kHz zur Strömungscharakterisierung an der Bauteiloberfläche genutzt werden. Dies dient insbesondere zur Detektion des Turbulenzeinsatzes, der Lage des Verdichtungsstoßes, des Buffeting und/oder einer lokalen Oberflächenreibung. Somit lassen sich auch durch das Oberflächenmaterial lokale Strömungscharakteristika mit hoher Genauigkeit detektieren, wobei laterale Störungen durch exponentiell abfallenden Körperschall im Strukturmaterial unterdrückt werden.

Bevorzugt werden Metalle oder Kunststoffe als Oberflächenmaterial verwendet, beispielsweise Aluminium, Stahl oder CFK. Die Materialstärke beträgt dabei vorzugsweise maximal 5mm. In diesem Fall sind keine besonderen elektronischen Verstärker nötig, um zur Verarbeitung geeignete Signale zu bekommen.

Vorteilhafterweise ist die Vorrichtung ein Sensormodul, das als Bestandteil der Bauteilstruktur ausgestaltet ist. Durch den modularen Einbau ohne Modifikation der dem strömenden Medium ausgesetzten Oberfläche wird eine kostengünstige Produktion erreicht und die Wartungsmöglichkeiten werden verbessert.

Vorteilhafterweise ist die Vorrichtung in einem temperierbaren, bzw. heiz- oder kühlbaren Raumsegment angeordnet, das z.B. isolierbar sein kann. Dadurch kann auch bei sehr geringen Außentemperaturen von beispielsweise -50°C in 10 km Flughöhe eine sichere und dauerhafte Meßwerterfassung ohne Ausfälle erreicht werden. Das Meßmodul selbst sowie mechanische Schnittstellen, beispielsweise Klebstoff, sind auf diese Weise vor Beschädigungen durch Materialermüdung infolge Temperaturschwankungen geschützt.

Das erfindungsgemäße Verfahren zur Strömungsanalyse an Bauteiloberflächen ist insbesondere für Luftfahrtanwendungen geeignet. Dabei erfolgt an einer innen gelegenen Oberfläche einer Bauteilstruktur eine Druck-, Schall- und/oder Vibrationsmessung, und aus den gewonnenen Signalen wird mittels künstlicher Intelligenz mindestens einer der Parameter Turbulenzeinsatz, Verdichtungsstoß, Buffeting, lokale Oberflächenreibung bestimmt. Durch das besondere Auswerteverfahren mittels künstlicher Intelligenz werden sämtliche Informationen der Meßdatenreihe einschließlich des vermeintlichen Rauschens herangezogen um die Strömungseigenschaften zu bestimmen. Dadurch wird eine erhöhte Genauigkeit erzielt, ohne daß Vorverarbeitungsschritte zur Eliminierung systematischer Störungen erforderlich wären.

Bevorzugt umfaßt das erfindungsgemäße Verfahren weiterhin Filterverfahren zur Signalvorverarbeitung, Merkmalsextraktion und/oder Klassifikationsverfahren.

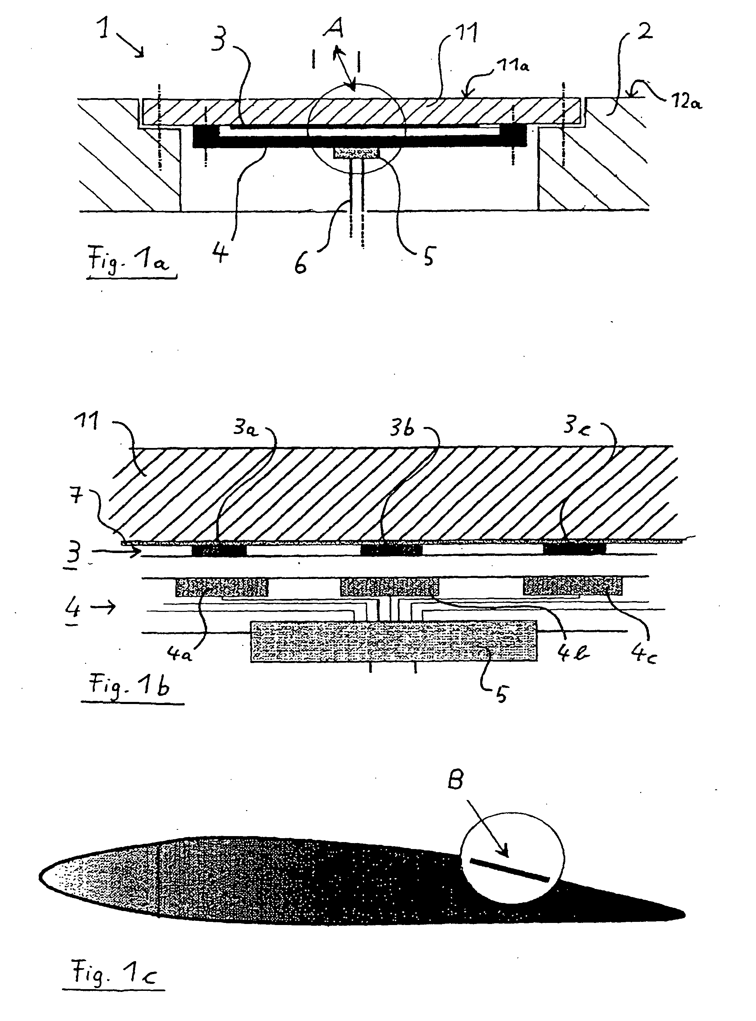

Die vorliegende Erfindung wird nachfolgend beispielhaft anhand der Zeichnungen beschrieben, in denen
- Figur 1a: ein Sensormodul zeigt, das als Teil einer Flügelstruktur ausgebildet ist und eine bevorzugte Ausführungsform der Erfindung darstellt;
- Figur 1 b: einen vergrößerten Ausschnitt des Sensormoduls von Figur 1a zeigt;
- Figur 1c: die Lage des Sensormoduls in einer Tragfläche zeigt;
- Figur 2: Meßwertsignale zeigt, die durch Piezofolien aufgenommen wurden, wobei die Anströmung einmal von der Vorderseite und einmal von der Rückseite des Folienträgers erfolgte;
- Figur 3: die PF-Signaldämpfung durch Stahl, Alu und CFK in einem Diagramm zeigt, indem das Signalverhältnis RS/VS gegenüber dem Strömungsdruck in bar aufgetragen ist;
- Figur 4: Piezofolien-Signale beim Übergang von laminarer zu turbulenter Strömung bei Variation des Anströmwinkels zeigt;
- Figur 5: eine perspektivische Teilansicht einer Tragfläche mit einer Sensoranordnung zeigt;
- Figur 6: ein Sensor-Aktor-Modul in einer Aufsicht und einem Längsschnitt zeigt.

Figur 1a zeigt als bevorzugte Ausführungsform der Erfindung ein Sensormodul 1, das in eine Flügelstruktur 2 integriert ist. Das Sensormodul 1 besteht aus einer Außen- bzw. Flügelhaut 11, deren Oberfläche 11a einen Teil der äußeren Oberfläche des Flügels bzw. der Flügelstruktur 2 bildet. Die Oberfläche 11a schließt bündig mit der daran angrenzenden Oberfläche 12a der angrenzenden Bereiche der Flügelstruktur 2 ab. Im Flugbetrieb bzw. bei einer Anströmung der Tragfläche ist die gesamte Bauteiloberfläche 11a, 12a der Strömung und den daraus resultierenden Kräften ausgesetzt.

Unterhalb der Flügelhaut 11 ist als eigentliche Sensoreinrichtung ein PVDF-Foliensensor 3 angeordnet und fest mit der Flügelhaut 11 verbunden. Der Foliensensor 3 ist aus einem Polymerfilm gefertigt und weist einen piezoelektrischen Effekt auf. Derartige Foliensensoren sind bekannt und beispielsweise im US Patent 4 868 447 beschrieben, auf das hier ausdrücklich Bezug genommen wird. Der PVDF-Sensor mißt

Dehnungsbewegungen bzw. Druck- oder Schallwellen, die aufgrund der Strömung auf die Flügelstruktur 2 wirken und sich durch die Flügelhaut 11 fortpflanzen. Die äußere Schicht des Sensormoduls 1, d.h. die Flügelhaut 11 im Bereich oberhalb des PVDF-Foliensensors 3, trägt eine Verstärkerplatine 4. Unterhalb der Verstärkerplatine 4 ist ein Stecker 5 angebracht, von dem aus Daten und Versorgungsleitungen 6 innerhalb der Flügelstruktur 2 zur Elektronik- bzw. Auswerteeinheiten geführt werden.

Figur 1b zeigt einen vergrößerten Ausschnitt von Figur 1a. Dieser Ausschnitt ist in Figur 1a mit A gekennzeichnet. Man erkennt, daß der PVDF-Foliensensor 3 durch eine Klebeschicht 7 mit der Flügelhaut 11 fest verbunden ist. Der Foliensensor 3 weist eine Anordnung von Sensoren 3a, 3b, 3c auf, die flächenhaft unter der Flügelhaut 11, d.h. auf Ihrer Rückseite, verteilt sind. Direkt unter dem Foliensensor 3 befindet sich die Verstärkerplatine 4 mit elektronischen Bauelementen 4a, 4b, 4c, die mit dem direkt darunterliegenden Stecker 5 elektrisch verbunden sind. Durch den vertikalen Aufbau von Flügelhaut, Foliensensor, Verstärkerplatine und Stecker ergeben sich besonders kurze Wege für die Leitungen und damit eine geringe Störanfälligkeit.

Über den Stecker 5 ist das gesamte Sensormodul 1 elektrisch mit weiteren Einheiten bzw. mit der Auswerteeinheit verbunden und daher leicht austauschbar. Das Sensormodul 1 ist integraler Bestandteil der Flügelstruktur 2, wobei auf der äußeren Oberfläche 11a, 12a der Bauteil- bzw. Flügelstruktur 2 keine Sensorelemente bzw. Leitungen vorliegen.

Die Flügelhaut 11 im Bereich des Sensormoduls 1 hat eine Dicke von 2 bis 3 mm, während die Flügelstruktur 2 in der hier dargestellten Ausführungsform eine Dicke von ca. 5 mm aufweist. Je nach Anwendungsfall sind aber auch andere Größen möglich.

Figur 1c zeigt einen Querschnitt durch eine Tragfläche eines Flugzeuges, die in einem Bereich B ein erfindungsgemäßes Sensormodul 1 aufweist, wie es oben unter Bezugnahme auf Figur 1a beschrieben wurde.

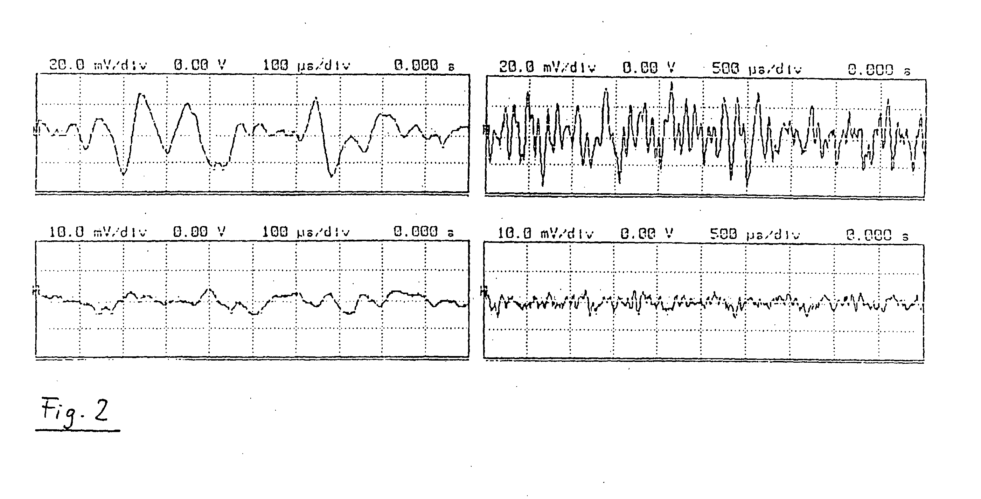

Figur 2 zeigt Piezofoliensignale, die bei Strömungsversuchen an Bauteiloberflächen ermittelt wurden. Dabei wurde ein Folienträger aus CFK mit einer Stärke von 2mm mit einer piezoelektrischen Folie versehen und von der Vorderseite (obere Meßreihen) bzw. von der Rückseite (untere Meßreihen) angeströmt. Die Meßreihen links - rechts unterscheiden sich durch verschiedene Zeitskalen. Die Meßsignale wurden an einer bestimmten Stelle des Folienträgers über die Zeit ermittelt. Man erkennt, daß bei einer Anströmung der Vorderseite, d.h. derjenigen Seite, auf der die Folie angebracht ist, wesentlich größere Amplitudenschwankungen vorliegen als bei einer Anströmung der Rückseite, das heißt derjenigen Seite, die keine Folie trägt.

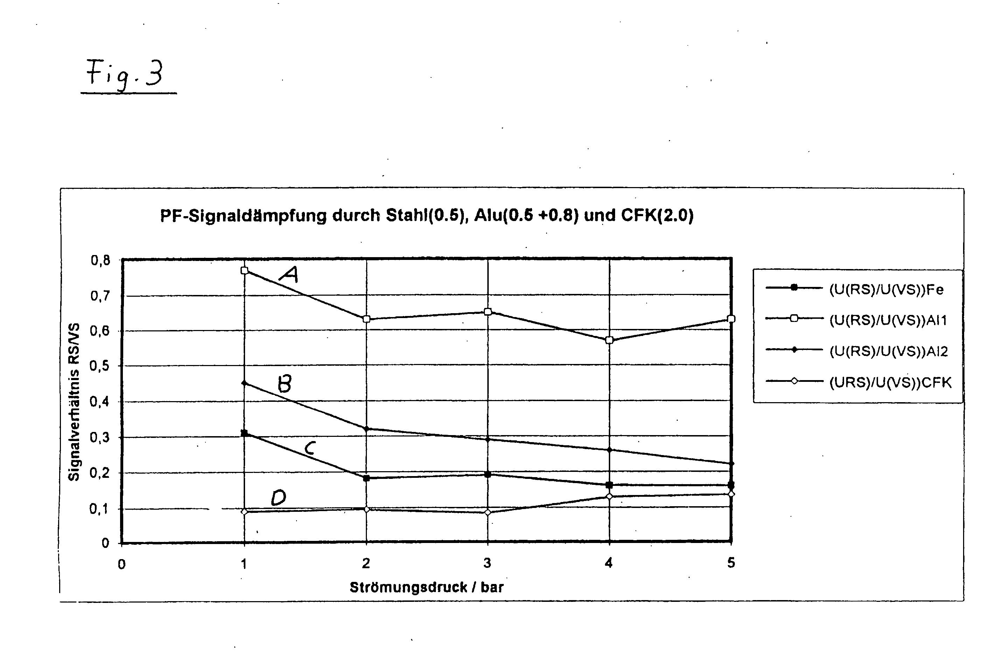

Figur 3 zeigt ein Diagramm, in dem das Signalverhältnis RS/VS in Abhängigkeit vom Strömungsdruck in bar für verschiedene Materialien als Folienträger aufgetragen ist. Die einzelnen Kurven sind den verschiedenen Materialien folgendermaßen zugeordnet: A:Aluminium, 0,5mm stark; B:Aluminium, 0,8mm stark; C:Stahl, 0,5mm stark; D:CFK, 2,0mm stark.

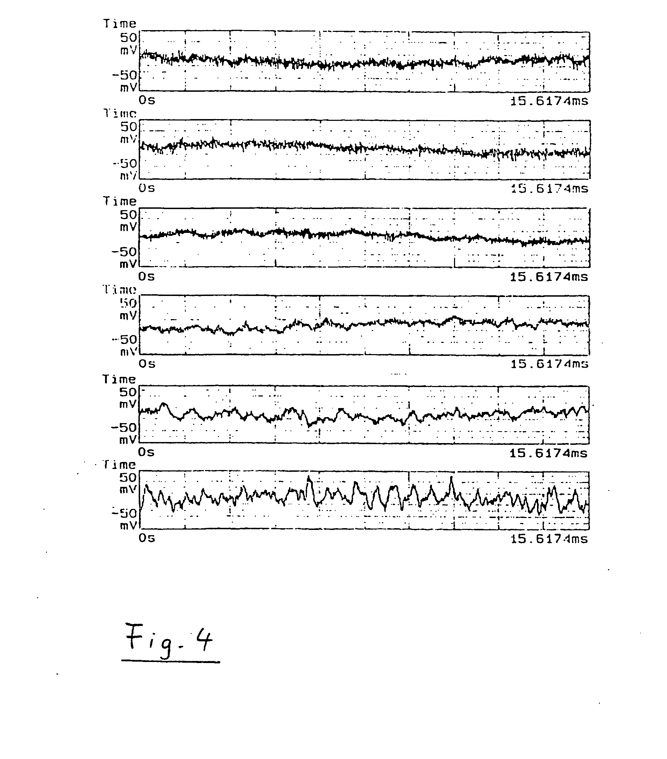

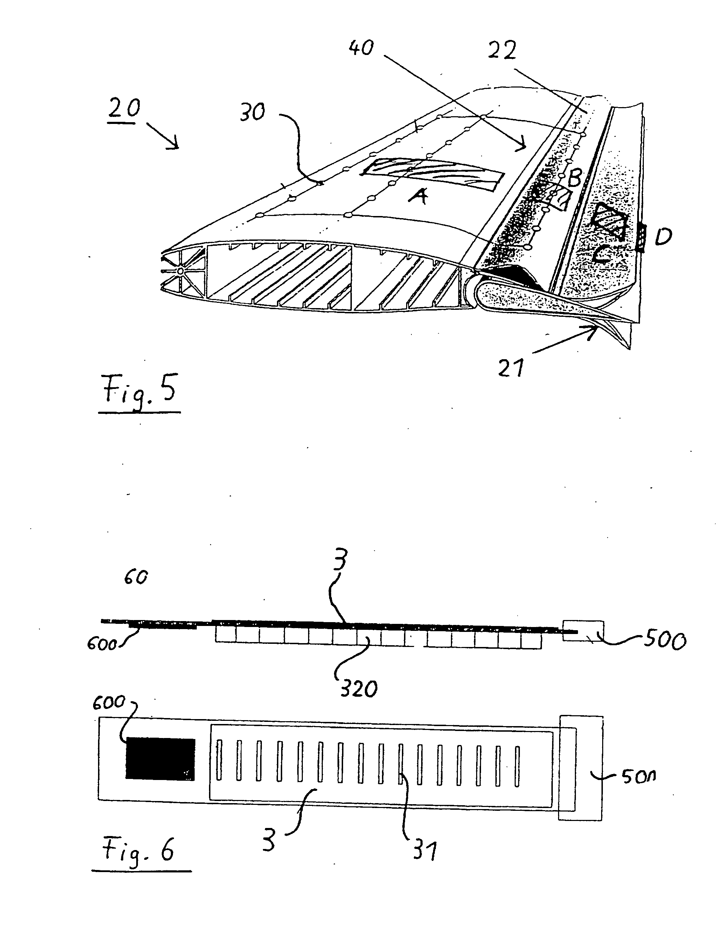

Figur 4 zeigt Piezofoliensignale beim Übergang von laminarer zu turbulenter Strömung bei einer Variation des Anströmwinkels. Diese Meßreihen wurden im Versuch ermittelt. Dabei betrug der Druck 5 bar und der Anströmwinkel betrug für die Meßreihen in der Reihenfolge von oben nach unten 15°, 30°, 45°, 60°, 75° und 90°. Es ist zu erkennen, daß beim Übergang von laminarer zu turbulenter Strömung ein deutlich anderes Schwingungsbild auftritt. Während bei einem Anströmwinkel zwischen 15° und 45° die Meßreihe glatt verläuft, d.h. mit einem relativ geringen niederfrequenten Anteil, ist bei einem Anströmwinkel von 60° und darüber ein deutlicher niederfrequenter Anteil der Druckschwankungen zu erkennen.

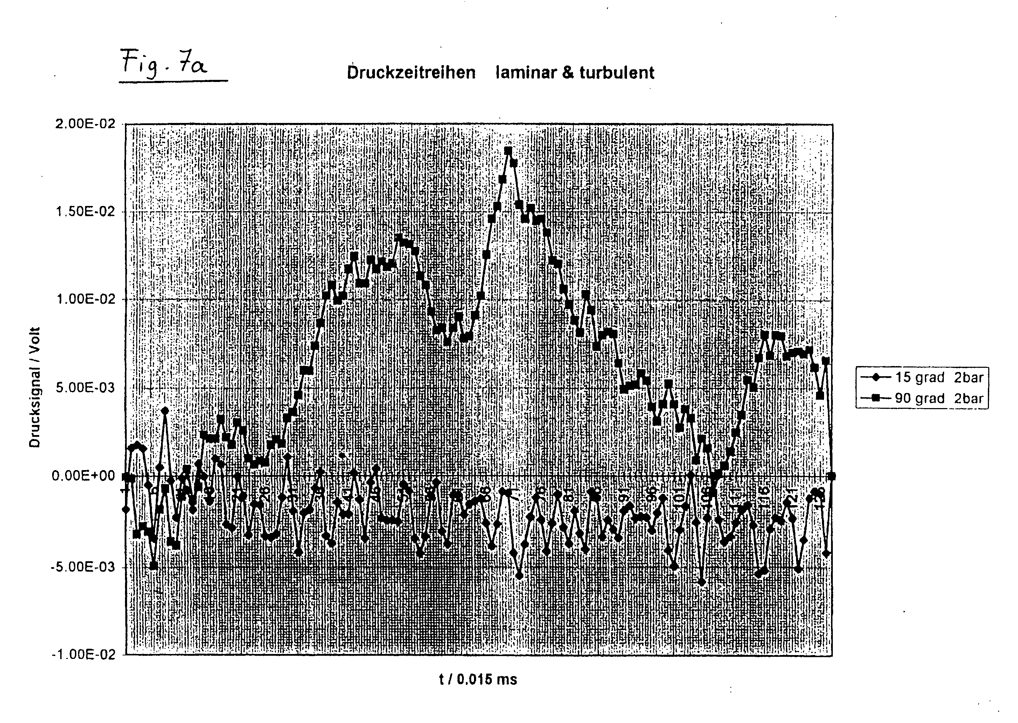

Figur 5 zeigt einen Schnitt durch eine Tragfläche 20 eines Flugzeuges, in perspektivischer Darstellung, die zur Bestimmung der Strömungscharakteristika mit einer Sensoranordnung 30 versehen ist. Die Sensoranordnung 30 besteht aus einem Netz von Sensoren, die sich unterhalb der Flügelhaut befinden und in Abbildung 5 zur Verdeutlichung ihrer Lage sichtbar gemacht sind. Der hier gezeigte Tragflügel ist in seiner Form veränderbar, um an seiner Oberfläche optimale Strömungsbedingungen zu erzielen. Die Tragfläche weist in ihrem hinteren Endabschnitt eine variable Wölbung 21 bzw. eine flexible Fowlerklappe auf. Daran angrenzend in Richtung zum Zentrum der Tragfläche befindet sich eine lokale Profilaufdickung 22 bzw. ein Spoilerbump, der ebenfalls einstellbar ist. An die Profilaufdickung 22 grenzt der zentrale Bereich 40 der Tragfläche. Um die Strömungscharakteristika zu bestimmen werden Druckmessungen in verschiedenen Bereichen der Tragfläche vorgenommen. Diese Bereiche sind in Figur 5 durch die schraffierten Flächen A, B, C, D schematisch gekennzeichnet. Durch Messung der Druck- bzw. Schallwellen im zentralen Bereich 40 der Tragfläche (Meßfläche A) wird eine Transitionsbestimmung möglich. Dadurch ist erkennbar, an welcher Stelle im Tragflächenprofil der Turbulenzeinsatz stattfindet. Der Meßbereich B im Bereich der Profilaufdickung 22 ermöglicht eine Bestimmung der Stoßlage und des Buffeting, d.h. der Stoßschwingung. Der Meßbereich C, der sich im Bereich der variablen Wölbung 21 befindet, ermöglicht eine Lokalisierung des Buffeting, d.h. der Ablösung, und der Meßbereich D an der hinteren Endkante der Tragfläche ermöglicht eine Aussage über den Hinterkantendruck.

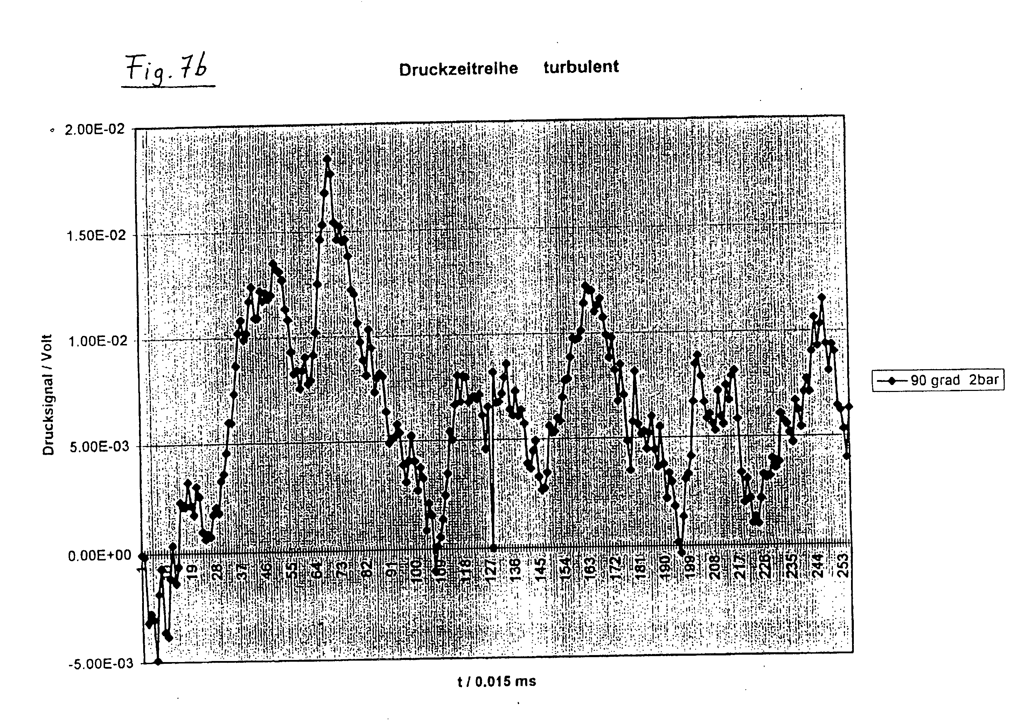

Abbildung 6 zeigt ein Sensor-Aktor-Modul für Piezofolien-Prinzipversuche. Die Folie 3 hat eine Gesamtfläche von 150 x 30mm und ist mit 16 Sensorbereichen 31 ausgestattet. Unterhalb der Piezofolie 3 befinden sich die zu den Sensorbereichen 31 gehörigen Ladungsverstärker 320. Ein Stecker 500 dient zur elektrischen Versorgung bzw. zur Übertragung der Meßsignale. Ein Piezoaktor 600 ist an die Piezofolie 3 gekoppelt.

Durch das Anbringen der Piezofolie unter der Oberfläche des Bauteils, wie es in der vorliegenden Erfindung vorgeschlagen wird, wird die Meßanordnung vor Verschmutzung, Regen, Schnee, Eis und Temperatureinflüßen geschützt. Beschädigungen oder gar eine Ablösung der Folie wird vermieden, und es wird ein leichter Einbau ohne komplizierte Verdrahtung bzw. elektrische Verstärker notwendig. Durch die Vorrichtung wird bei der Strömungscharakterisierung der Turbulenzeinsatz bzw. Transition, der Verdichtungsstoß, das Buffeting und die lokale Oberflächenreibung detektiert. Diese Meßaufgaben sind mit der erfindungsgemäßen Anordnung der Sensoreinrichtung innerhalb der Bauteilstruktur bzw. auf der Rückseite der Bauteiloberfläche durchführbar. Dazu werden Frequenzen bis zu 250 kHz genutzt. Diese ermöglichen eine Detektion lokaler Strömungscharakteristika durch das Oberflächenmaterial. Laterale Störungen werden durch den exponentiell abfallenden Körperschall unterdrückt. Anders ausgedrückt findet bei hohen Frequenzen im Ultraschallbereich statt einer Wellenausbreitung eine abbildende Ausbreitung statt. Durch hohe Abtastfrequenzen wird in Kombination mit einer geeigneten Signalverarbeitung eine völlige Eliminierung der niederfrequenten Struktureigenschwingungen erreicht. Hinzu kommt, daß mit den Sensorfeldern gemäß der vorliegenden Erfindung Laufzeitmessungen auch von nicht linearen Druck- und Dichtemodulationen der Strömung über den Körperschall durchführbar sind, wie beispielsweise die Bewegung einer Stoßwellenfront.

Bei der Realisierung der vorliegenden Erfindung wurden praxisrelevante Oberflächenmaterialien wie Aluminium, Stahl oder Kohlefaserverbundwerkstoffe in Laborversuchen eingesetzt. Bis zu einer Materialstärke von ca. 5mm sind keine besonderen elektronischen Verstärker nötig, um zur Weiterverarbeitung.geeignete Signale zu bekommen. Offensichtlich sind alle Stoffe mit geeigneter Festigkeit, wie z.B. Metalle oder Kunststoffe, einsetzbar.

Vorteilhafterweise werden verschiedene aktive und passive Verfahren zur Erzeugung des Körperschalls genutzt, der zum einen bei Druckschwankungen durch Normalkräfte bezüglich der Oberfläche erzeugt wird, und zum anderen über die Oberflächenreibung durch Scherkräfte angeregt wird.

Da gemäß der vorliegenden Erfindung die der Strömung ausgesetzte Bauteiloberfläche nicht durch eine Sensoreinrichtung bzw. Sensorfolie belegt ist, ergeben sich weitere vorteilhafte Möglichkeiten, wie z.B. die aktive Beeinflussung durch aktorische, lokale Oberflächenverformungen, Miniklappen, Minischlitze usw. Auch ist eine passive Beeinflussung isotrop z.B. durch definierte Rauigkeit zu erreichen, ebenso wie anisotrope Effekte durch Löcher, Rillen usw. Damit sind konkurrierende Effekte signaltechnisch trennbar, so z.B. richtungsabhängige Strömungscharakteristika.

Durch die Wahl des Materials und dessen Einbau läßt sich das entstehende Körperschallsignal beeinflussen, beispielsweise durch Schallisolationsmaßnahmen gegenüber Störungen die z.B. von Motoren, Triebwerken usw. verursacht werden.

Die vorliegende Erfindung ist als Sensormodul bzw. Sensor-Elektronik-Modul in einer besonders bevorzugten Ausführungsform auf einer Platine ohne räumliche Trennung durch das Oberflächenmaterial realisiert. In einer weiteren Variante ist das Meßmodul und die mechanische Schnittstelle, d.h. der Klebstoff, durch Verlegung in einem isolierbaren, d.h. heizbaren oder kühlbaren Raumsegment temperierbar. Dadurch werden Beschädigungen durch extreme Temperaturverhältnisse bzw. -schwankungen vermieden.

Weiterhin ist eine Einbautechnik ohne Oberflächeneingriff möglich. Damit ist eine vollständige Vorfertigung und Testbarkeit der Vorrichtung vor dem Einbau möglich. Der Wartungsaufwand ist deutlich reduziert.

Im folgenden wird ergänzend auf das Signalverarbeitungsverfahren eingegangen. Es umfaßt Filterverfahren zur Signalvorverarbeitung, Merkmalsextraktion und Klassifikationsverfahren. Durch Anwendung von Verfahren der künstlichen Intelligenz werden erheblich verbesserte Auswerteergebnisse erzielt. Bei diesem Ansatz gehen keine detaillierten Kenntnisse der Strömungsphysik ein. Die bekannte Auswertung von RMS-Werten reicht bei hohen Grenzfrequenzen nicht aus. Vielmehr sind Vorverarbeitungsschritte zur Eliminierung systematischer Störungen, in erster Linie niederfrequenter Signalanteile, erforderlich um die Detektionswahrscheinlichkeit von schwachen Effekten zu erhöhen.

Durch die vorliegende Erfindung ergibt sich für geregelte Systeme die Möglichkeit der Frühwarnung vor Effekten, die dann aktorisch vermieden werden können. Das ist beispielsweise für die Buffeting-Überwachung erforderlich. Da die Ablösung der laminaren Strömung über makroskopische Blasen die Ursache für das Buffeting ist, läßt sich eine Frühwarnung über hochfrequente Signalanteile detektieren, die aus mikroskopischen Strömungsfluktuationen vor den zur Ablösung führenden makroskopischen Fluktuationen eintreten. Da das Buffeting lokalisiert entsteht, werden in der vorliegenden Erfindung die Merkmale aus räumlichen und zeitlichen Signalkorrelationen extrahiert. Entsprechend dem Ansatz der künstlichen Intelligenz ergibt sich der erforderliche Algorythmus nach den jeweiligen Anforderungen des Einzelfalls, wobei Lemstichproben für die jeweilige spezielle Anwendung zum optimalen Parametersatz führen. Im einfachsten Fall handelt es sich bei diesen Parametern um Schwellwerte, die überschritten werden müssen, damit ein Effekt als detektiert gilt.

Die Erfindung ermöglicht eine systematische Analyse mit der Möglichkeit einer Vorhersage einzelner Effekte, was insbesondere durch Einbindung der künstlichen Intelligenz in das Auswerteverfahren erreicht wird.

Die Erfindung wurde bisher hauptsächlich anhand von Luftfahrtanwendungen beschrieben. Es sind jedoch auch andere Einsatzmöglichkeiten vorhanden, so z.B. in der Kfz-Technik, wobei ähnliche strömungsmechanische Meßverfahren erforderlich sind. Dabei ist zum einen die Aerodynamik des Fahrzeuges ein wichtiges Einsatzfeld, und zum anderen die Motortechnik.

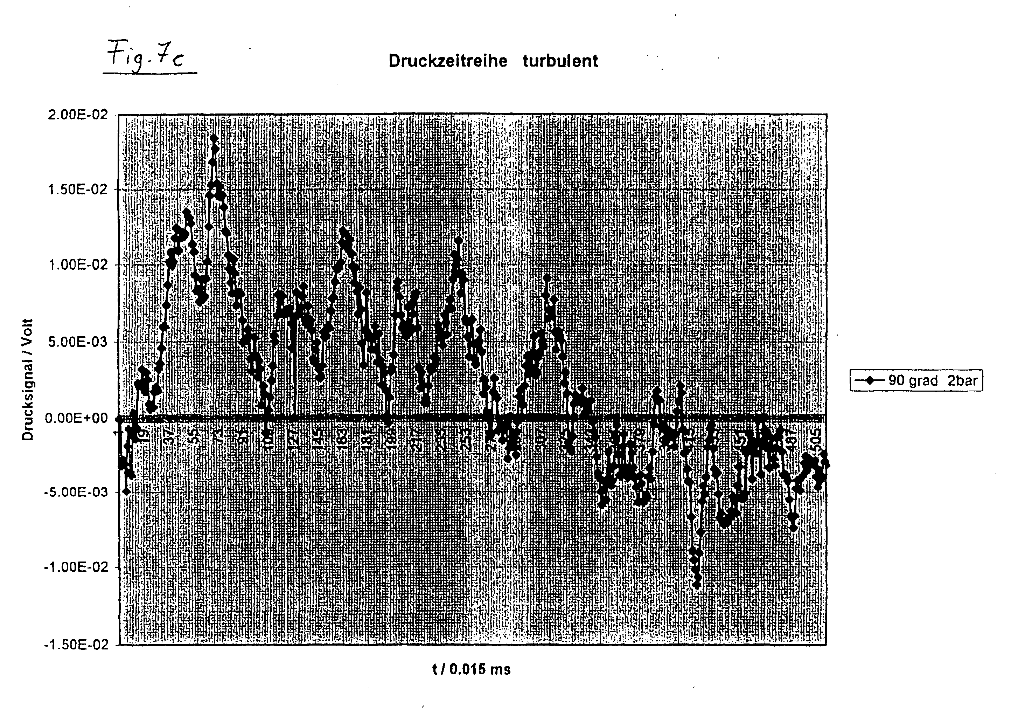

Die Figuren 7a, 7b und 7c zeigen verschiedene Signalreihen, die mit der erfindungsgemäßen Vorrichtung aufgenommen wurden. Dabei ist jeweils das Drucksignal in Volt gegenüber der Zeit t in Millisekunden aufgetragen.

Figur 7a zeigt ein Diagramm mit 128 Meßpunkten, wobei die obere Kurve einen Anströmwinkel von 90° wiedergibt und eine turbulente Strömung zeigt, während die untere Kurve bei einem Anströmwinkel von 15° aufgenommen wurde und eine laminare Strömung zeigt.

Figur 7b zeigt ein weiteres Diagramm für turbulente Strömung mit 256 Meßpunkten und Figur 7c ein noch weiteres Diagramm mit 512 Meßpunkten.

Die chaotische Signalreihe, die in Figur 7c gezeigt ist, und deren erste Hälfte im Diagramm von Figur 7b für turbulente Strömung enthält die zur Klassifikation notwendigen Merkmale. In dem in Figur 7a gezeigten Diagramm ist für die ersten 256 Meßpunkte ein Vergleich mit der entsprechenden laminaren Strömung enthalten. Dabei ist zu erkennen, daß die folgenden diskriminierenden Merkmale ausschlaggebend sind:
a) größere Amplitudendifferenzen
b) größere mittlere Schwankungen
c) auftreten breiter lokaler Spitzen und Doppelspitzen die nicht periodisch sind.

Dabei ist das letzte Merkmal (Merkmal c) wegen seiner Invarianz gegen Dämpfung und Rauschen besonders zur Unterscheidung geeignet. Die Merkmalsextraktion wird durch Korrelation mit einem oder mehreren zuvor gelernten Testmustern durchgeführt.

## Patentansprüche

1. Vorrichtung zur Bestimmung von Strömungscharakteristika an Bauteiloberflächen, insbesondere für die Strömungsanalyse an Flugkörpern, mit einer Sensoreinrichtung (3; 30) zur Aufnahme von Druck- oder Schallwellen, die an eine Bauteilstruktur (2; 20) gekoppelt ist, um auf die Bauteiloberfläche (11a, 12a) wirkende Kräfte zu messen,
**dadurch gekennzeichnet,**
**daß** die Sensoreinrichtung (3; 30) fest mit der Innenseite einer äußeren Wandung (11) der Bauteilstruktur (2;20) verbunden ist und vollständig unter der Bauteiloberfläche (11a, 12a) angeordnet ist, um die Strömungscharakteristika durch das Oberflächenmaterial zu detektieren.

2. Vorrichtung nach Anspruch 1, weiterhin **gekennzeichnet durch** eine Auswerteeinheit zur Signalauswertung mittles Verfahren der künstlichen Intelligenz.

3. Vorrichtung nach Anspruch 1 oder 2, **dadurch gekennzeichnet, daß** die Sensoreinrichtung (3;30) eine Vielzahl von Drucksensoren (3a,3b,3c) umfaßt, die auf der Rückseite einer Außenhaut der Bauteilstruktur (2) angeordnet sind, wobei die Außenhaut die äußere Wandung (11) bildet.

4. Vorrichtung nach einem der vorhergehenden Ansprüche, **dadurch gekennzeichnet, daß** die Sensoreinrichtung (3) eine piezoelektrische Folie oder einen Foliensensor umfaßt.

5. Vorrichtung nach einem der vorhergehenden Ansprüche, **dadurch gekennzeichnet, daß** die Bauteilstruktur (2) eine Tragfläche eines Flugkörpers ist, wobei die Sensoreinrichtung (3) unterhalb der Flügelhaut in einem Tragflächenbereich angeordnet ist.

6. Vorrichtung nach einem der vorhergehenden Ansprüche, **dadurch gekennzeichnet, daß** Daten- und oder Versorgungsleitungen (6) der Sensoreinrichtung (3) vollständig innerhalb der Bauteilstruktur (2) angeordnet sind.

7. Vorrichtung nach einem der vorhergehenden Ansprüche, **dadurch gekennzeichnet, daß** Frequenzen kleiner oder gleich 250 kHz zur Strömungscharakterisierung an der Bauteiloberfläche (11a, 12a) genutzt werden, insbesondere zur Detektion des Turbulenzeinsatzes, des Verdichtungsstoßes, des Buffeting und/oder einer lokalen Oberflächenreibung.

8. Vorrichtung nach einem der vorhergehenden Ansprüche, **dadurch gekennzeichnet, daß** Metalle oder Kunststoffe als Oberflächenmaterial verwendet werden, insbesondere Aluminium, Stahl oder CFK, wobei die Materialstärke maximal 5 mm beträgt.

9. Vorrichtung nach einem der vorhergehenden Ansprüche, **dadurch gekennzeichnet, daß** sie in Form eines Sensormoduls als Bestandteil der Bauteilstruktur (2) vorliegt.

10. Vorrichtung nach einem der vorhergehenden Ansprüche, **dadurch gekennzeichnet, daß** sie in einem temperierbaren Raumsegment angeordnet ist.

11. Verfahren zur Strömungsanalyse an Bauteiloberflächen, insbesondere für Luftfahrtanwendungen, **dadurch gekennzeichnet, daß** an einer innen gelegenen Oberfläche einer Bauteilstruktur (2) eine Druck-, Schall- und/oder Vibrationsmessung erfolgt und aus den gewonnenen Signalen mittels künstlicher Intelligenz einer oder mehrere der Parameter Turbulenzeinsatz, Verdichtungsstoß, Buffeting und lokale Oberflächenreibung bestimmt werden.

12. Verfahren nach Anspruch 12, **dadurch gekennzeichnet, daß** es Filterverfahren zur Signalvorverarbeitung, Merkmalsextraktion und/oder Klassifikationsverfahren umfaßt.

## Claims

1. A device for determining flow characteristics on the surfaces of construction units, in particular for analysing the flow on flying bodies, with a sensor device (3; 30) for receiving pressure or sound waves which is coupled to a construction-unit structure (2; 20) in order to measure forces acting upon the construction-unit surface (11a, 12a),
**characterized in that**
the sensor device (3; 30) is connected in a fixed manner to the inside of an external wall (11) of the construction-unit structure (2; 20) and is situated completely below the construction-unit surface (11a, 12a) in order to detect the flow characteristics through the surface material.

2. A device according to Claim 1, further **characterized by** an evaluation unit for evaluating signals by means of artificial intelligence methods.

3. A device according to Claim 1 or 2, **characterized in that** the sensor device (3; 30) comprises a plurality of pressure sensors (3a, 3b, 3c) which are arranged on the rear side of an outer skin of the construction-unit structure (2), wherein the outer skin forms the external wall (11).

4. A device according to one of the preceding Claims, **characterized in that** the sensor device (3) comprises a piezoelectric foil or a foil sensor.

5. A device according to one of the preceding Claims, **characterized in that** the construction-unit structure (2) is a support face of a flying body, wherein the sensor device (3) is situated in a support-face region below the skin of the wing.

6. A device according to one of the preceding Claims, **characterized in that** data lines and/or supply lines (6) of the sensor device (3) are situated completely inside the construction-unit structure (2).

7. A device according to one of the preceding Claims, **characterized in that** frequencies of less than or equal to 250 kHz are used for characterizing the flow on the construction-unit surface (11a, 12a), in particular for detecting the use of turbulence, compression shock, buffeting and/or a local surface friction.

8. A device according to one of the preceding Claims, **characterized in that** metals or plastics materials are used as the surface material, in particular aluminium, steel or carbon-fibre-reinforced plastics materials, wherein the thickness of the material amounts to a maximum of 5 mm.

9. A device according to one of the preceding Claims, **characterized in that** it is present in the form of a sensor module as a component of the construction-unit structure (2).

10. A device according to one of the preceding Claims, **characterized in that** it is situated in a space segment capable of being tempered.

11. A method of analysing the flow on the surfaces of construction units, in particular for use in air travel, **characterized in that** measurement of the pressure, sound and/or vibration takes place on an inner surface of a construction-unit structure (2), and one or more of the parameters comprising the use of turbulence, compression shock, buffeting and local surface friction is or are determined by means of artificial intelligence from the signals obtained.

12. A method according to Claim 12, **characterized in that** it comprises filtering methods for pre-processing of signals, extraction of features and/or classification methods.

## Revendications

1. Dispositif pour déterminer les caractéristiques d'écoulement à la surface d'un composant, en particulier pour l'analyse de l'écoulement sur des objets volants, comprenant une installation de capteurs (3 ; 30) pour détecter les ondes de pression ou de son, cette installation étant couplée à la structure de la pièce (2 ; 20) pour mesurer les efforts agissant à la surface (11a, 12a) de la pièce,
**caractérisé en ce que**
l'installation de capteurs (3 ; 30) est reliée solidairement au côté intérieur d'une paroi extérieure (11) de la structure (2 ; 20) de la pièce et est installée complètement en dessous de la surface (11a, 12a) de la pièce pour détecter les caractéristiques d'écoulement à travers la matière de la surface.

2. Dispositif selon la revendication 1,
**caractérisé en outre par**
une unité d'exploitation pour exploiter le signal à l'aide d'un procédé d'intelligence artificielle.

3. Dispositif selon la revendication 1 ou 2,
**caractérisé en ce que**
l'installation de capteurs (3 ; 30) comporte un ensemble de capteurs de pression (3a, 3b, 3c) installé au dos d'une peau extérieure de la structure (2) du composant, cette peau extérieure formant la paroi extérieure (11).

4. Dispositif selon l'une des revendications précédentes,
**caractérisé en ce que**
l'installation de capteurs (3) comprend un film piézo-électrique ou un capteur en forme de film.

5. Dispositif selon l'une des revendications précédentes,
**caractérisé en ce que**
la structure (2) du composant est une surface portante d'un objet volant et l'installation de capteur (3) est montée sous la peau de l'aile dans une zone de surface portante.

6. Dispositif selon l'une des revendications précédentes,
**caractérisé en ce que**
les lignes de transmission de données ou d'alimentation (6) de l'installation de capteurs (3) sont prévues complètement à l'intérieur de la structure (2) du composant.

7. Dispositif selon l'une des revendications précédentes,
**caractérisé en ce qu'**
on utilise des fréquences inférieures ou égales à 250 kHz pour caractériser l'écoulement à la surface (11a, 12a) du composant, en particulier pour détecter la présence de turbulence, le choc de compression, l'effet tampon et/ou une friction surfacique locale.

8. Dispositif selon l'une des revendications précédentes,
**caractérisé en ce qu'**
on utilise des métaux ou des matières plastiques comme matériaux de surface, en particulier de l'aluminium, de l'acier, ou des matières plastiques renforcées par des fibres de carbone, l'épaisseur de la matière étant au maximum de 5 mm.

9. Dispositif selon l'une des revendications précédentes,
**caractérisé en ce qu'**
il se présente sous la forme d'un module de capteur comme partie de la structure (2) du composant.

10. Dispositif selon l'une des revendications précédentes,
**caractérisé en ce qu'**
il est installé dans un segment d'espace que l'on peut mettre en température.

11. Procédé d'analyse de l'écoulement à la surface d'un composant, notamment pour des applications aériennes,
**caractérisé en ce qu'**
on effectue une mesure de pression, une mesure phonique et/ou une mesure de vibration au niveau de la surface intérieure d'une structure (2) du composant et à partir des signaux obtenus, par traitement par intelligence artificielle on détermine un ou plusieurs paramètres, à savoir la présence de turbulence, le choc de compression, l'effet tampon et la friction locale de surface.

12. Procédé selon la revendication 11,
**caractérisé en ce qu'**
il comprend un procédé de filtrage pour effectuer un traitement préalable du signal, une extraction de caractéristique et/ou un procédé de classification.
